(19) Europäisches Patentamt
European Patent Office
Office européen des brevets

(11) Veröffentlichungsnummer: **0 231 433**
**B1**

(12) # EUROPÄISCHE PATENTSCHRIFT

(45) Veröffentlichungstag der Patentschrift: **02.08.89**

(51) Int. Cl.⁴: **C08G 69/32**, C08G 69/42, C08G 69/28

(21) Anmeldenummer: **86113396.5**

(22) Anmeldetag: **29.09.86**

(54) **Verfahren zur Herstellung thermoplastisch verarbeitbarer aromatischer Polyamide mit chemisch eingebauten Ether- und Sulfonylgruppen.**

(30) Priorität: **09.11.85 DE 3539846**

(43) Veröffentlichungstag der Anmeldung: **12.08.87 Patentblatt 87/33**

(45) Bekanntmachung des Hinweises auf die Patenterteilung: **02.08.89 Patentblatt 89/31**

(84) Benannte Vertragsstaaten: **AT BE CH DE FR GB IT LI NL**

(56) Entgegenhaltungen:
**MAKROMOL. CHEM., RAPID COMMUNICATION, Band 5, 1984, Seiten 47-51; YOSHIO IMAI et al.: "Synthesis of polyether-amides by direct polycondensation of poly(oxyethylene)dicarboxylic acids with aromatic diamines in the presence of triphenyl phosphite and pyridine"23, 14 pp.plication to Fatty Acids" 000**

**Die Akte enthält technische Angaben, die nach dem Eingang der Anmeldung eingereicht wurden und die nicht in dieser Patentschrift enthalten sind.**

(73) Patentinhaber: **HÜLS AKTIENGESELLSCHAFT, - RSP Patente / PB 15 - Postfach 13 20, D-4370 Marl 1(DE)**

(72) Erfinder: **Bartmann, Martin, Dr., Burgstrasse 35, D-4350 Recklinghausen(DE)**

**EP 0 231 433 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Beschreibung

Die aromatischen Polyamide der Formel

$$\left[ CO - Ar - CO - NH - Ar' - X - Ar'' - Y - Ar'' - X - Ar' - NH \right]_m$$

(I)

zeichnenen sich nicht nur durch hohe Temperaturbeständigkeit und gute mechanische Eigenschaften aus; sie sind auch thermoplastisch verarbeitbar (s. Elias/Vohwinkel, "Neue polymere Werkstoffe für die industrielle Anwendung", 2. Folge, Carl Hanser Verlag 1983, Seite 242 f.).

Bekannte Verfahren zur Herstellung von aromatischen Polyamiden sind:

1. Tieftemperatur-Lösungspolykondensation durch Umsetzung von aromatischen Dicarbonsäuredichloriden mit aromatischen Diaminen in polaren Lösungsmitteln (US-PSS 32 87 324, 35 41 056, 36 00 350, 38 19 587, 37 67 756, 38 69 429, 36 73 143, 38 17 941, 30 63 966 und DE-AS 22 19 703).
Gegenstand der US-PS 3 859 252 sind thermoplastische Kondensationspolymere mit aromatischer Bisamidstruktur. Die Verbindung mit R = H, X = $SO_2$ und Y = O entspricht I. Sie wird aus Isophthaloylchlorid und dem entsprechenden Diamin III hergestellt (vgl. Seite 4).

2. Grenzflächenpolykondensation durch Reaktion zwischen einem aromatischen Dicarbonsäuredichlorid und einem aromatischen Diamin an der Grenzfläche einer organischen und einer wäßrigen Phase (DE-OSS 19 08 297, 23 25 139 und DE-PS 30 06 899).

Aromatische Polyamide können auch durch Reaktion von aromatischen Dicarbonsäuren mit aromatischen Diisocyanaten (DE-OS 19 28 435) und durch Umsetzung von aromatischen Dicarbonsäurediarylestern mit aromatischen Diaminen hergestellt werden.

So beschreiben Brode et al. die Darstellung von 4,4'-/Sulfonylbis(p-phenylenoxy)/dianilin (Verb. III, X = O, Y = $SO_2$) aus p-Aminophenol und 4,4'-Dichlordiphenylsulfon und dessen Kondensation mit aromatischen Säurechloriden wie z. B. Terephthalsäurechlorid zu aromatischen Polyamiden mit Glasübergangstemperaturen (Tg) zwichen 230 und 320 °C. (Polymer Prepr. Am. Chem. Soc. Div. Pol. Chem. 15, 761 (1974) und Adv. Chem. Ser. 1975, 142; vgl. CA 84, 55 30s und CA 83, 1931 86 f).

In den japanischen Offenlegungsschriften 78/104 695, 79/77 693 und 81/99 227 (vgl. CA 90, 104 612a, 91, 212 148h und 95, 204 677x) wird die Umsetzung von Gemischen aus Iso- und Terephthalsäurechlorid und/oder -anhydrid mit aromatischen Diaminen der Formel III beschrieben.

Auch die von Adduci et al. synthetisierten Polyamide, Polyamide und Polyamidimide werden ausschließlich durch Umsetzung der Säurechloride oder -anhydride mit den entsprechenden Diaminen III erhalten (vgl. Polym. Eng. Sci. 21, 712 (1981) und J. Appl. Polym. Sci 28, 2069 (1983).

Diese Verfahren haben den Nachteil, daß sie auf den Einsatz von aktivierten, schwierig handhabbaren Monomeren, wie Dicarbonsäurechloriden und -anhydriden angeweisen sind.

Es sind auch Verfahren bekannt, bei denen man aromatische Polyamide direkt durch Reaktion von aromatischen Dicarbonsäuren und aromatischen Diaminen in Gegenwart von aromatischen Phosphiten erhält. Als Lösemittel haben sich für dieses Verfahren N-Methylsäureamide, insbesondere N-Methylpyrrolidon, bewährt. Mit anderen dipolar aprotischen Lösemitteln wie z. B. Dimethylsulfoxid werden dagegen keine polymeren Amide erhalten (vgl. F. Higashi et al, J. Polym. Sci., Polym. Chem. Ed. 18, 1711 ff. (1980)).

Aus einer Zusammenfassung (vgl. S. M. Aharoni et al, J. Polym. Sci., Polym. Chem. Ed. 22, 2579 (1984) folgt, daß

- durch Zusatz von Lithium- oder Calciumchlorid das Molekulargewicht der Amide erhöht werden kann;
- das zum Einsatz kommende Phosphit Arylgruppen enthalten muß und vorzugsweise Triphenylphosphit ist;
- die Arylphosphite mindestens in einer solchen Menge eingesetzt werden müssen, daß auf 1 Mol umzusetzendem Amid 1 Mol einer Verbindung mit der Gruppierung

$$Ar - O - P<$$

kommt, da diese Gruppierung im Laufe der Reaktion verbraucht wird und diese Reaktion die treibende Kraft der Umsetzung darstellt;
- der optimale Temperaturbereich zur Durchführung dieser Reaktion bei 80 bis 100 °C liegt, während bei Temperaturen deutlich über 100 °C das Molekulargewicht deutlich abnimmt,
- Pyridin für die Reaktion nicht notwendig ist, aber gleichwohl einen beschleunigenden Einfluß auf den Ablauf der Reaktion hat.

In der europäischen Offenlegungsshrift 0 099 997 wird schließlich ein Verfahren zur Herstellung von

aromatischen Polyamidem beschrieben, bei dem aromatische Dicarbonsäuren mit aromatischen Diaminen in einem polaren Lösemittel in Gegenwart eines Dehydratisierungskatalysators wie z. B. einer P-haltigen Verbindung umgesetzt werden. Die hier offenbarten Polyamide können aufgrund ihrer hohen Erweichungspunkte, die im Bereich der Zersetzungstemperatur oder sogar darüber liegen, nicht thermoplastisch verarbeitet werden. Eigene Untersuchungen zeigten indessen, daß man weder mit Triethyl- oder Triphenylphosphit noch mit einer P-haltigen Säure wie z. B. hypophosphoriger Säure als Katalysator und Sulfolan als Lösemittel befriedigende Resultate erhälte. Die Produkte, die man nach 3 bis 12 Stunden erhält, sind von schlechter Farbqualität. Setzt man elektronenreiche aromatische Diamine wie z. B. 4,4'-Diaminodiphenylether ein, erhält man nur nach langen Reaktionszeiten hochmolekulare Produkte, die durch die Bildung nicht identifizierter Nebenprodukte stark verfärbt sind. Setzt man dagegen elektronenarme Diamine wie z. B. 4,4'-Diaminodiphenylsulfon ein, versagt das Verfahren der EP-OS 0 099 997 völlig. Es lassen sich nur stark verfärbte, oligomere Produkte herstellen.

Der Stand der Technik zeigt, daß die Herstellung hochmolekularer aromatischer Amide in empfindlicher und heute noch nicht überschaubarer Weise von zahlreichen Parametern abhängt. Es erschien nicht möglich, hochmolekulare Polyamide von einwandfreier Farbqualität direkt durch Umsatz von aromatischen Diaminen mit aromatischen Dicarbonsäuren zu erhalten.

Es wurde jetzt ein Verfahren gefunden, mit dem dies doch möglich ist. Dieses Verfahren besteht darin, daß man eine etwa äquimolare Mischung aus einer aromatischen Dicarbonsäure der Formel II und einem aromatischen Diamin der Formel III inm Gegenwart einer mindestens katalytisch wirksamen Menge von Triphenylphosphit oder einer vom Phosphor abgeleiteten Säure der Formel; $H_3PO_n$ mit $2 \leq n \leq 4$ oder einer katalytisch wirksamen Menge einer Mischung aus den genannten Phosphorverbindungen und einem 4-Dialkylaminopyridin in einem polar aprotischen Lösemittel bei Temperaturen zwischen 160 und 300 °C umsetzt.

$$HOOC - Ar - COOH \quad (II)$$

$$+$$

$$H_2N - Ar' - X - Ar'' - Y - Ar'' - X - Ar' - NH_2 \quad (III)$$

$$\xrightarrow{\text{Kat.}} (CO - Ar - CO - NH - Ar' - X - Ar'' - Y - Ar'' - X - Ar' - NH)_m \quad (I)$$

In Anbetracht der Tatsache, daß nach den Angaben von S. M. Aharoni et al., zur Herstellung von aromatischen Polyamiden stöchiometrische Mengen einer Phosphorverbindung erforderlich sind, erscheint der Befund überraschend, daß erfindungsgemäß katalytische Mengen nicht nur ebenso die Reaktion in Gang bringen sondern darüber hinaus zu erheblich besseren Ergebnissen führen.

Der Zusatz der geringen Menge des 4-Dialkylaminopyridins hat einen ganz erheblichen Effekt auf die Bildung des Polyamids.

- Der J-Wert, der ein Maß für das Molekulargewicht darstellt, wird erheblich erhöht.
- Die Farbqualität des Polymeren wird deutlich verbessert.
- Die Polykondensationszeit wird drastisch reduziert.
- Die Ausbeute ist besser.

Erfindungsgemäß können folgende aromatische Dicarbonsäuren oder deren Mischungen eingesetzt werden:

Isophathalsäure,

Terephthalsäure,

sowie deren Derivate, die durch einen Alkylrest mit 1 bis 4 C-Atomen substituiert sind.

Bis zu 40 Molprozent der soeben aufgeführten aromatischen Dicarbonsäuren können durch folgende Säuren ersetzt werden:

- aliphatische Dicarbonsäuren oder deren Anhydride mit 2 bis 12 C-Atomen;
- aliphatische Oligoamide mit endständigen COOH-Gruppen, die durch Umsetzung von aliphatischen $C_2$-

$_{12}$-Dicarbonsäuen mit Lactamen und Polyalkylenpolyaminen mit bis zu 5 Aminogruppen und bis zu 12 C-Atomen erhalten werden;
- aromatische Tri- und Tetracarbonsäuren oder deren Anhydride mit 9 bis 22 C-Atomen.

Beispielhaft genannt seien:
- Maleinsäureanhydrid
- ein Oligoamid, bestehend aus 5 Molen Ethylendiamin und 6 Molen Hexandicarbonsäure der Formel

$$HO\left[OC-(CH_2)_6-CO-NH-CH_2-CH_2-NH\right]_5 CO(CH_2)_6-CO-OH$$

- ein Oligoamid, bestehend aus 10 Molen Laurinlactam und 1 Mol Dodecandisäure
- Trimellithsäureanhydrid und Pyromellithsäureanhydrid

Erfindungsgemäß können folgende aromatische Diamine oder deren Mischungen eingesetzt werden:
4,4′-Bis(4-aminophenoxy)diphenylsulfon (Verb. III, X = O, Y = $SO_2$) und
4,4′-Bis(4-aminophenylensulfonyl)diphenylether (Verb. III, X = $SO_2$, Y = O)

Die Verbindungen III mit X = O und Y = $SO_2$ wird durch Umsetzung von p-Aminophenol mit 4,4′-Dichlordiphenylsulfon erhalten.

Die Herstellung der Verbindung III mit X = $SO_2$ und Y = O wird in der US-PS 3 859 252 beschrieben.

Bis zu 40 Molprozent der soeben aufgeführten aromatischen Diamine können durch folgende Amine ersetzt werden:
- aliphatisch Di- und Polyamine mit 2 bis 12 C-Atomen
- aliphatische Oligoamide mit endständigen $NH_2$-Gruppen, die durch Umsetzung der soeben aufgeführten Di- und/oder Polyamine mit Lactamen oder aliphatischen Di- und/oder Polycarbonäuren erhalten werden.

Beispielhaft seien genannt:
Dodecamethylendiamin
Oligoamid-12-diamin, hergestellt durch Polymerisation von 10 Molen Laurinlactam in Gegenwart von 1 Mol Hexamethylendiamin

Die Umsetzung der aromatischen Dicarbonsäuren II mit den Diaminen III wird in Gegenwart einer katalytischen Menge einer phosphorhaltigen Verbindung oder in Gegenwart einer katalytischen Menge eines Gemisches aus dieser phosphorhaltigen Verbindung und einem 4-Dialkylaminopyridin durchgeführt.

Für m gilt: $3 < m < 300$, vorzugsweise $10 < m < 100$.

Geeignete phosphorhaltige Verbindungen umfassen Triphenylphoshit, hypophosphorige Säure, phosphorige Säure und Phoshorsäure.

Die als Cokatalysator eingesetzten 4-Dialkylaminopyridine weisen die Struktur

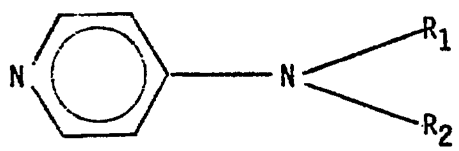

auf, wobei $R_1$ und $R_2$ entweder unabhängig voneinander für einen $C_{1-10}$-Alkylrest stehen oder zusammen mit dem Aminostickstoff einen Pyrrolidin- oder Piperidinring bilden können.

Bevorzugt sind:
4-Dimethylaminopyridin
4-Dibutylaminopyridin
4-Di-n-hexylaminopyridin
4-Piperidinylpyridin.

Die Pyridinderivate können gemäß Synthesis, (1978), 844, hergestellt werden.

Bezogen auf 100 Mole eingesetzter Dicarbonsäure werden jeweils 0,1 bis 10 Mol, vorzugsweise 1 - 5 Mole der phosphorhaltigen Verbindung und des 4-Dialkylaminopyridins bzw. der phosphorhaltigen Verbindung eingesetzt. Die Polykondensation wird bei einer Temperatur zwischen 160 und 300 °C, vorzugsweise zwischen 210 und 260 °C, durchgeführt.

Üblicherweise arbeitet man unter Inertgas bei Normaldruck. Es kann jedoch, wenn dies aus irgendwelchen Gründen wünschenswert sein sollte, auch bei leichtem Über- oder Unterdruck gearbeitet werden. Die zur Erzielung ausreichend hochmolekularer Produkte notwendigen Reaktionzeiten liegen zwischen 1 und 4 Stunden.

Als Reaktionsmedium werden polare, aprotische, organische Lösemittel bevorzugt, die imstande sind, zumindest bei 180 °C die Ausgangsprodukte wie auch die polymeren Amide hinreichend zu lösen. Beispiele geeigneter Lösungsmittel sind N-Methylpyrrolidon-2 (NMP), N-Methyl-3-caprolactam, N,N-Dimethylacetamid, Dimethylsulfoxid, Sulfolan (Tetrahydrothiophendioxid) und Diphenylsulfon. Diese Lösungsmittel können allein oder als Mischung eingesetzt werden.

Beispiele anderer Lösungsmittel, die in Kombination mit den oben erwähnten polaren, aprotischen Lösungsmittel eingesetzt werden können, sind Chlorbenzol, Dichlorbenzol, Nitrobenzol, Diphenylether, Anisol, Phenol und m-Kresol. Der Anteil der aprotischen, polaren Lösungsmittel sollte in diesen Mischungen 20 Gew.-% betragen. Bevorzugt wird Sulfolan.

Vorzugsweise wird das Verfahren in folgender Weise durchgeführt:

Man erhitzt die Lösung aus etwa äquimolaren Mengen aromatischer Dicarbonsäure und aromatischem Diamin in Gegenwart der phosphorhaltigen Verbindung und gegebenfalls des 4-Dialkylaminopyridins bei einer Feststoffkonzentration von 5 - 50 Gew.-% in einer Inertgasatmosphäre auf Temperaturen zwischen 200 und 260 °C, hält diese Temperatur etwa 1 bis 3 Stunden und isoliert sodann das Polyamid nach üblichen Verfahrensweisen.

Zur Herstellung von ausreichend hochmolekularen Produkten ist es notwendig, das während der Polykondensation gebildete Wasser aus dem Reaktionssystem zu entfernen. Gewöhnlich reicht hierzu das Über- bzw. Durchleiten des Inertgases aus. Es kann jedoch auch Vakuum angelegt und/oder durch (Azeotrop)-Destillation ein Teil des Lösungsmittels zusammen mit dem Wasser entfernt werden.

Am Ende der Polykondensation erhält man eine mehr oder weniger viskose Lösung oder eine Suspension des Polymeren im eingesetzten Lösungsmittel. Die Isolierung der aromatischen Polyamide aus diesen Lösungen bzw. Suspension ist nicht kritisch: sie können entweder direkt weiterverarbeitet oder gegebenenfalls nach Verdünnung durch Zugabe von Antilösemittel gefällt werden.

Als Antilösemittel kommen niedrige Alkohole wie z. B. Methanol, Ethanol und Isopropanol, Ketone wie z. B. Aceton und Methylethylketon oder Wasser bzw. deren Mischungen in Frage.

Die in der Regel als Pulver anfallenden Produkte können durch Verpressen bei erhöhter Temperatur (> 200°C) zu Folien verarbeitet werden. Aus den organischen Lösungen der Polyamide in geeigneten aprotischen polaren Lösemitteln können in üblicher Weise auch Gießfolien hergestellt werden.

Die folgenden Beispiele sollen das erfindungsgemäße Verfahren näher erläutern.

Beispiel 1

Einsatzstoffe: 9,96 g (0,06 Mol) Isophthalsäure
25,92 g (0,06 Mol) 4,4'-Bis(4-aminophenoxy)diphenylsulfon
0,35 g Triphenylphosphit
0,30 g 4-Dimethylaminopyridin
60 ml Sulfolan

Durchführung

Die Einsatzstoffe werden in einer Rührapparatur vorgelegt und durch fünffaches Evakuieren und anschließendes Belüften mit Stickstoff von Sauerstoffspuren befreit. Danach wird die Mischung unter Rühren und Stickstoffspülung (100 l/h) bei 130 °C Innentemperatur homogenisiert. Anschließend heizt man die Mischung innerhalb von 60 Minuten auf 230 °C auf. Nach 120 Minuten Polykondensationszeit (PK-Zeit)bei 230 °C und 180 Minuten bei 250 °C und Abkühlen auf 150 °C verdünnt man den deutlich viskos gewordenen Ansatz mit 250 ml Dimethylformamid und fällt das Produkt durch Einrühren in 500 ml Methanol. Den entstandenen Niederschlag saugt man ab, wäscht mit Methanol nach und trocknet anschließend das Produkt bei 80 °C im Ölpumpenvakuum.
Ausbeute = 31,2 g
J-Wert = 64 $cm^3/g$ (in m-Kresol)
Farbe = weiß
Tg = 250 °C (DSC-Analyse; differential scanning calorimetry)

Das Produkt kann bei 310 °C zu flexiblen Folien verpreßt werden.

Beispiel 2

Einsatzstoffe: 9,96 g (0,06 Mol) Isophthalsäure
25,92 g (0,06 Mol) 4,4'-Bis(4-aminophenoxy)diphenylsulfon (BAPS)
0,50 g $H_3PO_2$
60 ml Sulfolan

Durchführung analog Beispiel 1 PK-Zeit = 120 Minuten bei 230 °C
180 Minuten bei 250 °C
Ausbeute = 31,5 g
J-Wert = 71 $cm^3/g$ (in m-Kresol)
Farbe = weiß
Tg = 250 °C

Das Produkt ist bei 310 °C zu flexiblen Folien verpreßbar.

Beispiel 3

Einsatzstoffe: 6,98 g (0,042 Mol) Isophthalsäure
3,00 g (0,018 Mol) Terephthalsäure
25,92 g (0,06 Mol) 4,4'-Bis(4-aminophenoxy)diphenylsulfon (BAPS)
0,35 g Triphenylphosphit
0,30 g 4-Dimethylaminopyridin
60 ml Sulfolan

Durchführung analog Beispiel 1 PK-Zeit = 120 Minuten bei 230 °C
= 150 Minuten bei 250 °C
Ausbeute = 31,2 g
J-Wert = 65 $cm^3/g$ (in m-Kresol)
Farbe = weiß

Das Produkt kann bei 230 °C zu flexiblen Folien verpreßt werden.

Beispiel 4

Einsatzstoffe 9,96 g (0,06 Mol) Isophthalsäure
28,8 g (0,06 Mol) 4,4'-Bis(4-aminophenylensulfonyl)diphenylether
0,35 g Triphenylphosphit
0,30 g 4-Dimethylaminopyridin
70 ml Sulfolan

Durchführung analog Beispiel 1 PK-Zeit = 120 Minuten bei 230 °C
= 300 Minuten bei 250 °C
Ausbeute = 33,1 g
J-Wert = 57 $cm^3/g$ (in m-Kresol)

Das Produkt kann bei 330 °C zu flexiblen Folien verpreßt werden.

Beispiel 5

Einsatzstoffe 6,74 g (0,040 Mol) Isophthalsäure
20,00 g (0,046 Mol) 4,4'-Bis(4-aminophenoxy)diphenylsulfon (BAPS)
11,46 g (0,006 Mol) Oligoamiddicarbonsäure der Formel

$$HOOC(CH_2)_{11}HN\!\left[\underset{\text{O}}{\text{C}}(CH_2)_{11}NH\right]_n\underset{\text{O}}{\text{C}}(CH_2)_{10}COOH$$

| | |
|---|---|
| 0,24 g | $H_3PO_2$ (50 %ig) |
| 60 g | Sulfolan |

Durchführung

Isophthalsäure, BAPS, $H_3PO_2$ und 30 g Sulfolan werden in einer Rührapparatur vorgelegt und durch fünffaches Evakuieren und anschließendes Belüften mit Stickstoff von Sauerstoff befreit. Danach wird die Mischung unter Rühren und Stickstoffspülung (100 l/h) bei 130 °C Innentemperatur homogenisiert. Anschließend heizt man die Mischung innerhalb von 60 Minuten auf 250 °C auf. Nach 120 Minuten Polykondensationszeit kühlt man das Vorkondensat auf Raumtemperatur ab und gibt die Oligoamiddicarbonsäure und 30 g Sulfolan zu. Nach fünffachem Evakuieren und Belüften mit Stickstoff wird in 15 Minuten auf 250 °C aufgeheizt. Nach 110 Minuten Polykondensationszeit wird der deutlich viskos gewordene Ansatz auf 160 °C abgekühlt und mit 450 ml Dimethylformamid verdünnt. In die erkaltete Lösung werden bei 50 °C 1000 ml Methanol eingerührt. Nach Abkühlen wird der entstandene Niederschlag abgesaugt, zweimal mit Methanol gewaschen und anschließend bei 100 °C im Ölpumpenvakuum getrocknet.

Ausbeute = 33,8 g
J-Wert = 86 $cm^3/g$ (in m-Kresol)
Farbe = weiß

Beispiel A

Polyamid aus Isophthalsäure, 4,4'-Bis(4-aminophenoxy)-diphenylsulfon und Triethylphosphit als Katalysator

Einsatzstoffe 6,64 g Isophthalsäure
17,30 g 4,4'-Bis(4-aminophenoxy)diphenylsulfon
275 µl Triethylphosphit
70 ml Sulfolan

Durchführung

Eine Mischung aus Isophthalsäure, 4,4'-Bis(4-aminophenoxy)diphenylsulfon, Triethylphosphit und Sulfolan wird in einer Rührapparatur vorgelegt und unter Rühren und Stickstoffspülung (50 1/h) auf 250 °C in 45 Minuten aufgeheizt. Nach 180 Minuten Reaktionszeit wird der viskos gewordene Ansatz auf 50 °C abgekühlt. Nach Zugabe von 100 ml Sulfolan und 100 ml N-Methylpyrrolidon wird das Reaktionsgemisch unter kräftigem Rühren langsam in 800 ml Methanol getropft. Nach einiger Zeit tritt Sättigung auf, und es setzt sich ein klebrig-polymerer Niederschlag ab.

Der Niederschlag wird in N-Methylpyrrolidon wieder aufgelöst und mit einem Gemisch aus Methanol/Wasser (80/20) ausgefällt und anschließend getrocknet.
Ausbeute = 18,5 g (82 %)
J-Wert = 21 $cm^3/g$ (in m-Kresol)

Beispiel B

Einsatzstoffe 6,64 g Isophthalsäure
17,30 g 4,4'-Bis-(4-aminophenoxy)diphenylsulfon
0,67 g Didecylphenylphosphit
70 ml Sulfolan

Durchführung analog Beispiel A Ausbeute = 19,4 g (87%)
J-Wert = 29 $cm^3/g$ (in m-Kresol)

**Patentansprüche**

1. Verfahren zur Herstellung von hochmolekularen aromatischen Polyamiden der allgemeinen Formel

$$\left[ CO - Ar - CO - NH - Ar' - X - Ar'' - Y - Ar'' - X - Ar' - NH \right]_m$$

wobei Ar, Ar' und Ar'' für einen gegebenenfalls durch $C_{1-4}$-Alkylgruppen substituierten m- oder p-Phenylenrest stehen und X und Y wechselseitig die Bedeutung von - O - oder - $SO_2$ - haben, und 3 < m < 300 gilt, durch Umsetzung von gegebenenfalls alkylsubstituierter Iso- und/oder Terephthalsäure mit Diaminen der Formel

$$H_2N - Ar' - X - Ar'' - Y - Ar'' - X - Ar' - NH_2$$

wobei man die Umsetzung bei Temperaturen zwischen 160 und 300 °C in Gegenwart katalytischer Mengen einer vom Phosphor abgeleiteten Säure der Formel $H_3PO_n$ mit n = 2,3,4 oder in Gegenwart katalytischer Mengen von Triphenylphosphit in einem polaren, aprotischen, organischen Lösemittel durchführt.

2. Verfahren nach Anspruch 1, dadurch gekennzeichnet, daß man die Umsetzung zusätzlich in Gegenwart katalytischer Mengen eines 4-Dialkylaminopyridins durchführt.

## Claims

1. A process for the preparation of a high molecular weight aromatic polyamide of the general formula

$$\left[ CO - Ar - CO - NH - Ar' - X - Ar'' - Y - Ar'' - X - Ar' - NH \right]_m$$

where Ar, Ar' and Ar" represent an m– or p–phenylene radical which is optionally substituted by $C_{1-4}$–alkyl groups, and
one of X and Y denotes –O– and the other denotes $-SO_2-$, and $3 < m < 300$, by reacting optionally alkylsubstituted isophthalic acid and/or terephthalic acid with a diamine of the formula

$$H_2N - Ar' - X - Ar'' - Y - Ar'' - X - Ar' - NH_2$$

the reaction being carried out at a temperature between 160 and 300°C in the presence of a catalytic amount of an acid derived from phosphorus, of the formula $H_3PO_n$ where n=2,3 or 4, or in the presence of a catalytic amount of triphenyl phosphite, in a polar, aprotic, organic solvent.

2. A process according to Claim 1, characterized in that the reaction is carried out in the additional presence of a catalytic amount of a 4-dialkylaminopyridine.

## Revendications

1. Procédé de préparation de polyamides aromatiques de poids moléculaire élevé, de la formule générale

$$\left[ CO - Ar - CO - NH - Ar' - X - Ar'' - Y - Ar'' - X - Ar' - NH \right]_m$$

dans laquelle Ar, Ar' et Ar" représentent un radical méta-phénylène ou para-phénylène éventuellement substitué par des groupes alkyle en $C_1$ à $C_4$ et X et Y représentent alternativement –O– ou $-SO_2-$, et m est supérieur à 3 et inférieur à 300, par réaction d'acide isophtalique et/ou téréphtalique éventuellement substitué par un alkyle, sur des diamines de formule

$$H_2N - Ar' - X - Ar'' - Y - Ar'' - X - Ar' - NH_2$$

la réaction étant effectuée à des températures comprises entre 160 et 300°C en présence de quantités catalytiques d'un acide dérivant du phosphore et répondant à la formule $H_3PO_n$, dans laquelle n est égal à 2, 3 ou 4, ou bien en présence de quantités catalytiques de phosphite de triphényle dans un solvant organique polaire, aprotique.

2. Procédé selon la revendication 1, caractérisé par le fait qu'on effectue la réaction complémentairement en présence de quantités catalytiques d'une 4-dialkyl-amino-pyridine.